# EUROPÄISCHE PATENTSCHRIFT

(11) **EP 2 930 352 B1**
(45) Veröffentlichungstag und Bekanntmachung des Hinweises auf die Patenterteilung: **25.07.2018**
(21) Anmeldenummer: 14164222.3
(22) Anmeldetag: 10.04.2014
(51) Int. Cl.: F03D 80/30, F03D 1/06

(54) **Windenergieanlagenrotorblatt mit einer Potentialausgleichsanordnung**
Wind turbine rotor blade with an equipotential bonding arrangement
Pale de rotor d'éolienne dotée d'un dispositif d'équipotentialité

(43) Veröffentlichungstag der Anmeldung: 14.10.2015
(73) Patentinhaber: Nordex Energy GmbH, 22419 Hamburg (DE)
(72) Erfinder: Ohlerich, Nick, 18055 Rostock (DE); Hellwig, Lutz, 17491 Greifswald (DE)
(74) Vertreter: Hauck Patentanwaltspartnerschaft mbB

(56) Entgegenhaltungen:
- DE-A1- 10 241 770
- JP-A- 2008 115 783
- US-A1- 2004 056 167
- US-A1- 2009 246 025

## Beschreibung

Die Erfindung betrifft eine Potentialausgleichsanordnung zur Verbindung zweier in ein Windenergieanlagenrotorblatt integrierter, elektrischer Anschlussstücke.

Es ist bekannt, Windenergieanlagenrotorblätter mit einer Blitzschutzeinrichtung vor Schäden durch einen Blitzschlag zu bewahren. Hierzu wird in der Regel im Bereich der Blattspitze ein Blitzschutzrezeptor angeordnet. Der Strom eines in den Blitzschutzrezeptor einschlagenden Blitzes wird dann über einen Blitzschutzleiter zur Blattwurzel hin und von dort über die Gondel und den Turm der Windenergieanlage in den Erdboden abgeleitet. Besondere Schwierigkeiten entstehen, wenn innerhalb des Windenergieanlagenrotorblatts mehrere elektrisch leitfähige Elemente mehr oder weniger parallel angeordnet sind. Infolge der hohen Blitzströme kommt es dann durch elektromagnetische Induktion zu großen Potentialdifferenzen zwischen den unterschiedlichen elektrisch leitfähigen Elementen, die zu Überschlägen und dadurch zu einer Beschädigung oder gar Zerstörung des Windenergieanlagenrotorblatts führen können. Es ist bekannt, derartigen Überschlägen durch Potentialausgleichselemente entgegenzuwirken.

Aus der Druckschrift EP 1 692 752 B1 ist ein Windenergieanlagenrotorblatt bekannt geworden, bei dem ein innenliegender, elektrisch leitfähiger Holm mit einem benachbart angeordneten Blitzschutzleiter verbunden ist. Hierzu sind im Inneren des Rotorblatts Potentialausgleichselemente vorgesehen, die den Holm und den Blitzschutzleiter über eine elektrische Leitung miteinander verbinden. Der Kontakt zum Holm wird über ein leitfähiges, flächiges Band hergestellt.

Aus der Druckschrift DE 10 2012 108 124 A1 ist ein Windenergieanlagenrotorblatt bekannt geworden, bei dem ein Blitzschutzleiter aus einem Band aus elektrisch leitfähigem Material besteht, das um die Profilendkante herum an der Außenseite des Rotorblatts angeordnet ist. An der Profilendkante gibt es außerdem eine Geräuschminderungsvorrichtung mit Zacken aus Metall, die mit dem leitfähigen Band elektrisch verbunden sind und als Blitzschutzrezeptoren wirken.

Aus der Druckschrift EP 1 112 448 B2 ist ein Windenergieanlagenrotorblatt mit mehreren elektrisch leitfähigen Gurten aus einem Kohlenstofffasermaterial bekannt geworden. Zur Erhöhung der elektrischen Leitfähigkeit der Gurte werden metallbeschichtete Kohlenstoffasern eingesetzt, sodass die Stromtragfähigkeit der Gurte für einen Einsatz als Blitzschutzleiter ausreichen soll. Zusätzlich kann ein zentral angeordneter metallischer Blitzschutzleiter eingesetzt werden. Die Gurte und gegebenenfalls der zusätzliche metallische Blitzschutzleiter sind an mehreren Längspositionen über Potentialausgleichelemente in Form von innenliegenden, elektrischen Leitern miteinander verbunden.

Aus der Druckschrift WO 2011/127995 A1 ist bekannt geworden, eine elektrische Heizmatte an der Außenseite eines Windenergieanlagenrotorblatts mit einem innenliegenden Anschlusskabel über einen Schraubbolzen elektrisch zu verbinden.

Aus der Druckschrift EP 1 664 528 B1 ist ein Windenergieanlagenrotorblatt mit elektrisch leitfähigen Hauptgurten aus einem Kohlenstofffasermaterial und zwei im Inneren des Rotorblatts angeordneten Blitzschutzleitern bekannt geworden. Ein Potentialausgleich zwischen einem Hauptgurt und einem Blitzschutzleiter wird über ein Kupfergitter, das den Hauptgurt kontaktiert, und eine elektrische Verbindungsleitung hergestellt. Ein mittlerer Abschnitt der Verbindungsleitung ist mit dem Blitzschutzleiter verschraubt. Ein freies Ende der Verbindungsleitung ist gemeinsam mit metallischen Zwischenstücken und dem Kupfergitter mit einem Blitzschutzrezeptor verschraubt.

Aus der Druckschrift EP 1 272 759 B1 ist ein Windenergieanlagenrotorblatt bekannt geworden, bei dem an der Außenseite elektrisch leitfähige Schichten als Blitzrezeptoren aufgebracht sind. Diese sind über Verbindungsmittel mit einem innenliegenden Blitzschutzleiter verbunden.

Die Druckschrift CN 201679646 U zeigt den Anschluss eines Blitzrezeptors an einem Windenergieanlagenrotorblatt. Der Blitzrezeptor ist in eine in der Rotorblattwandung angeordnete Buchse eingeschraubt. An der Innenseite ist ein Blitzschutzleiter mit der Buchse verbunden.

Die Druckschrift DE 102 41 770 A1 beschreibt eine Toleranzausgleichsscheibe, die in eine Durchgangsbohrung eines Flachmaterialstreifens drehbeweglich einsetzbar ist und die eine Nut aufweist, die von einer ersten Radiusposition zu einer zweiten Radius-position führt. Durch Drehen der Toleranzausgleichsscheibe kann die Nut relativ zu einer Befestigungsbohrung ausgerichtet werden.

Die Druckschrift US 2004/0056167 A1 beschreibt ein Befestigen einer Platte an einer Wand mit Hilfe von zwei in kreisförmige Bohrungen der Platte einsetzbaren Toleranzausgleichsscheiben, die jeweils eine Nut aufweisen.

Die Druckschrift US 2009/0246025 A1 beschreibt ein Windenergieanlagenrotorblatt mit einem zentral verlaufenden Blitzschutzleiter und mit mehreren, an einer Außenseite des Rotorblatts angeordneten Blitzrezeptoren, die über jeweils ein Anschlussstück mit dem Blitzschutzleiter verbunden sind und streifenförmig in Profilrichtung verlaufen.

Davon ausgehend ist es die Aufgabe der Erfindung, eine Potentialausgleichsanordnung zur Verbindung zweier in ein Windenergieanlagenrotorblatt integrierter, elektrischer Anschlussstücke zur Verfügung zu stellen, die einen zuverlässigen Potentialausgleich zwischen den beiden Anschlussstücken bewirkt und die einfach und positionsgenau montiert werden kann, sowie ein Verfahren zur Herstellung eines solchen Potentialausgleichs.

Diese Aufgabe wird gelöst durch ein Windenergieanlagenrotorblatt mit den Merkmalen des Anspruchs 1. Vorteilhafte Ausgestaltungen sind in den sich anschließenden Unteransprüchen angegeben.

Die Potentialausgleichsanordnung dient zur Verbindung zweier in ein Windenergieanlagenrotorblatt integrierter, elektrischer Anschlussstücke und weist die folgenden Merkmale auf:
- Eine Potentialausgleichsschiene mit zwei Enden, die zur elektrischen Verbindung mit jeweils einem der Anschlusstücke bestimmt sind, wobei die Potentialausgleichsschiene an mindestens einem der beiden Enden eine Durchgangsbohrung aufweist,
- eine Toleranzausgleichsscheibe, die in die Durchgangsbohrung drehbeweglich einsetzbar ist und die eine Nut aufweist, die von einer ersten Radiusposition der Toleranzausgleichsscheibe zu einer zweiten Radiusposition der Toleranzausgleichsscheibe führt, und
- ein Befestigungsmittel, das in die Nut der Toleranzausgleichsscheibe einsetzbar und zur Befestigung an dem elektrischen Anschlussstück ausgebildet ist.

Bei den beiden in das Windenergieanlagenrotorblatt integrierten Anschlussstücken kann es sich um beliebige Anschlusspunkte am Windenergieanlagenrotorblatt handeln, zwischen denen ein Potentialausgleich herbeigeführt werden soll. Jedes der beiden elektrischen Anschlussstücke dient als Anschlusspunkt für ein elektrisch leitfähiges Element des Windenergieanlagenrotorblattes, beispielsweise für einen Blitzschutzleiter, für einen kohlenstofffaserhaltigen Gurt, für eine elektrische Versorgungsleitung oder für eine Abschirmung einer elektrischen Signalleitung. Die Anschlussstücke stellen die Anschlusspunkte für die Potentialausgleichsanordnung zur Verfügung. Bei den Anschlussstücken kann es sich um massive metallische Körper handeln, die innerhalb des Windenergieanlagenrotorblatts und/oder an dessen Oberfläche angeordnet sind.

Die Potentialausgleichsschiene weist eine hohe elektrische Leitfähigkeit und eine hohe Stromtragfähigkeit auf, sodass im Falle eines Blitzschlags der gewünschte Potentialausgleich herbeigeführt wird, ohne dass es zu einer Beschädigung kommt. Vorzugsweise besteht die Potentialausgleichsschiene aus massivem Metall mit Querschnittsabmessungen von beispielsweise 2 mm mal 30 mm oder mehr, insbesondere aus Kupfer. Durch eine solche, großformatige Ausgestaltung der Potentialausgleichsschiene kann diese als Blitzrezeptor eingesetzt werden.

Die beiden Anschlussstücke sind an unterschiedlichen Punkten des Windenergieanlagenrotorblatts angeordnet und bereits bei der Herstellung des Windenergieanlagenrotorblatts integriert worden, insbesondere durch Einbetten in ein Laminat oder durch Einbetten oder Befestigen an einem vorgefertigten Bauteil, das in das Windenergieanlagenrotorblatt integriert wird, beispielsweise in einen vorgefertigten Gurt. Beispielsweise kann eines der beiden Anschlussstücke in eine saugseitige Halbschale und das andere in eine druckseitige Halbschale des Windenergieanlagenrotorblatts integriert worden und die beiden Halbschalen können nachfolgend zu dem Windenergieanlagenrotorblatt zusammengefügt worden sein.

Aufgrund der sehr großen Abmessungen des Windenergieanlagenrotorblatts und der komplizierten Fertigungsschritte unterliegt die Anordnung der elektrischen Anschlussstücke größeren Fertigungstoleranzen. Beispielsweise kann ein Anschlussstück relativ zu seiner Sollposition um einige Millimeter bis einige Zentimeter abweichend angeordnet sein. Dennoch soll die Potentialausgleichsschiene, unter anderem aus aerodynamischen Gründen, exakt in einer vorgegebenen Position parallel zur Strömungsrichtung montiert werden. Dies ermöglicht die Erfindung durch eine Durchgangsbohrung an mindestens einem Ende der Potentialausgleichsschiene, in die eine Toleranzausgleichsscheibe drehbeweglich einsetzbar ist.

Die Toleranzausgleichsscheibe weist eine Nut auf, in die ein Befestigungsmittel einsetzbar ist. Das Befestigungsmittel dient zur Befestigung der Toleranzausgleichsscheibe an dem elektrischen Anschlussstück. Die Nut führt von einer ersten Radiusposition zu einer zweiten Radiusposition der Toleranzausgleichsscheibe, d. h. sie ermöglicht ein Einsetzen des Befestigungsmittels in unterschiedlichen Abständen vom Mittelpunkt der Toleranzausgleichsscheibe. Die erste Radiusposition kann beispielsweise in der Mitte der Toleranzausgleichsscheibe oder in einem Abstand von weniger als 10 mm davon angeordnet sein. Die zweite Radiusposition kann beispielsweise nahe an einem äußeren Umfang der Toleranzausgleichsscheibe oder in einem Abstand von weniger als 10 mm davon angeordnet sein. Durch Drehen der Toleranzausgleichsscheibe in der Durchgangsbohrung kann eine Anordnung gefunden werden, in der das Befestigungsmittel durch die Nut hindurch relativ zu dem Anschlussstück so angeordnet ist, dass es einfach befestigt werden kann.

Im montierten Zustand kann eine Oberseite der Toleranzausgleichsscheibe bündig mit einer Oberseite der Potentialausgleichsschiene abschließen. Dies ist aerodynamisch vorteilhaft. Alternativ oder zusätzlich kann eine Unterseite der Toleranzausgleichsscheibe bündig mit einer Unterseite der Potentialausgleichsschiene abschliessen, was eine an der Außenseite Windenergieanlagenrotorblatts anliegende Befestigung des vereinfachen kann. Mit "Oberseite" ist stets eine von dem Windenergieanlagenrotorblatt weg weisende Seite gemeint, mit "Unterseite" eine dem Windenergieanlagenrotorblatt zugewandte Seite.

Mit dem Befestigungsmittel werden die Toleranzausgleichsscheibe und die Potentialausgleichsschiene an dem Anschlussstück befestigt. Zugleich wird eine elektrische Verbindung zwischen dem Anschlussstück und der Potentialausgleichsschiene hergestellt. Diese kann durch das Befestigungsmittel vermittelt werden oder durch einen sonstigen, mittelbaren oder unmittelbaren Kontakt zwischen dem Anschlussstück und der Toleranzausgleichsscheibe bzw. der Potentialausgleichsschiene. Zusätzlich kann die Potentialausgleichsschiene beispielsweise durch Verkleben mit einer Außenseite des Windenergieanlagenrotorblatts fixiert werden.

Ein besonderer Vorteil der Erfindung ist, dass trotz der beschriebenen Fertigungstoleranzen beim Integrieren der Anschlussstücke eine Potentialausgleichsanordnung aus vorgefertigten Elementen verwendet werden kann. Die Potentialausgleichsanordnung kann zudem besonders einfach und schnell montiert werden.

In einer Ausgestaltung weist die Potentialausgleichsschiene eine V-Form auf mit einem saugseitigen Schienenabschnitt zur Anordnung an einer Saugseite und einem druckseitigen Schienenabschnitt zur Anordnung an einer Druckseite des Windenergieanlagenrotorblatts, wobei die beiden Schienenabschnitte an der Spitze der V-Form miteinander verbunden sind oder ineinander übergehen. Bei dieser Ausgestaltung ist die Potentialausgleichsschiene zur Herstellung eines Potentialausgleichs um eine Profilendkante des Windenergieanlagenrotorblatts herum vorgesehen. Die Spitze der V-Form wird an der Profilendkante angeordnet. Die die beiden Schenkel der V-Form bildenden Schienenabschnitte können an eine Krümmung der Saugseite bzw. der Druckseite angepasst sein, sodass sie nach Befestigung der Potentialausgleichsschiene an dem Windenergieanlagenrotorblatt überall an dessen aerodynamischer Oberfläche anliegen. Die Potentialausgleichsschiene kann durch Umformen aus einem einzigen Metallstrang gefertigt werden. In diesem Fall gehen die beiden Schienenabschnitte ineinander über. Alternativ können die beiden Schienenabschnitte miteinander verbunden werden, beispielsweise durch Verschweißen, elektrisch leitfähiges Verkleben oder Verschrauben.

In einer Ausgestaltung weist die Durchgangsbohrung eine Stufe auf, an der die in die Durchgangsbohrung eingesetzte Toleranzausgleichsscheibe anliegt. Die Stufe kann eine Breite im Bereich von beispielsweise 1 mm bis 10 mm aufweisen, sodass ein großflächiger Kontakt zwischen Potentialausgleichsschiene und Toleranzausgleichsscheibe sichergestellt ist. Außerdem wird verhindert, dass die Toleranzausgleichsscheibe durch die Durchgangsbohrung hindurchrutscht, sodass eine optimale Befestigung der Potentialausgleichsschiene erzielt wird.

In einer Ausgestaltung weist die Toleranzausgleichsscheibe an ihrem Außenumfang eine Stufe auf, die an der Stufe der Durchgangsbohrung anliegt. Die Stufe am Außenumfang der Toleranzausgleichsscheibe kann komplementär zu der Stufe in der Durchgangsbohrung geformt sein. Auf diese Weise kann die Toleranzausgleichsscheibe bis zum unteren Ende der Durchgangsbohrung führen und dort eine elektrische Kontaktfläche auf Höhe der Oberfläche des Windenergieanlagenrotorblatts zur Verfügung stellen.

In einer Ausgestaltung verläuft die Nut in der Toleranzausgleichsscheibe in radialer Richtung. So kann mit einer geradlinigen, besonders kurzen Nut gearbeitet werden, sodass die an der Unterseite der Toleranzausgleichsscheibe zur Verfügung gestellte Kontaktfläche so groß wie möglich ist.

In einer Ausgestaltung verläuft die Nut in der Toleranzausgleichsscheibe spiralförmig. Beim Drehen einer solchen Toleranzausgleichsscheibe kann die Radiusposition, an der das Befestigungsmittel eingesetzt wird, besonders feinfühlig justiert werden.

Bei der Erfindung ist die Potentialausgleichsanordnung in einer der zuvor erläuterten Ausgestaltungen an einer Außenseite eines Windenergieanlagenrotorblatts, das zwei integrierte, elektrische Anschlussstücke aufweist, befestigt, wobei eines der beiden Enden der Potentialausgleichsschiene elektrisch mit einem der beiden Anschlussstücke und das andere der beiden Enden mit dem anderen der beiden Anschlussstücke verbunden ist. Die Potentialausgleichsschiene kann insbesondere so angeordnet sein, dass sie einen Potentialausgleich um eine Profilendkante des Windenergieanlagenrotorblatts herum bewirkt, wie vorstehend bereits angesprochen.

Bei der Erfindung sind die beiden Anschlussstücke jeweils elektrisch mit einem Blitzschutzleiter des Windenergieanlagenrotorblatts verbunden. Beispielsweise kann es sich um einen druckseitigen oder einen saugseitigen Blitzschutzleiter handeln, und die Potentialausgleichsanordnung kann einen Potentialausgleich zwischen diesen beiden Blitzschutzleitern herstellen.

In einer Ausgestaltung weist eines der Anschlusstücke ein Innengewinde auf und das Befestigungsmittel ist ein Gewindebolzen mit einem Kopf und einem Schaft, wobei der Schaft in das Innengewinde eingeschraubt ist und der Kopf an der Toleranzausgleichsscheibe anliegt. Der Gewindebolzen kann also einfach nach dem Ausrichten der Toleranzausgleichscheibe in der Durchgangsbohrung in das Innengewinde eingeschraubt werden, wobei sein Kopf dann die Toleranzausgleichsscheibe an das Anschlussstück heranzieht. Einbezogen ist auch eine Lösung mit einer zusätzlichen Unterlegscheibe. In der Nut kann eine Stufe ausgebildet sein, sodass der Kopf des Gewindebolzens ganz oder teilweise versenkt in der Nut angeordnet werden kann.

In einer Ausgestaltung ist zwischen der Toleranzausgleichsscheibe und dem elektrischen Anschlussstück ein elektrisch leitfähiges Distanzstück angeordnet, das mit einer Unterseite an einer Kontaktfläche des Anschlussstücks und mit einer Oberseite an der Toleranzausgleichsscheibe anliegt. Das Distanzstück kann beispielsweise aus Kupfer bestehen, um eine hohe Leitfähigkeit sicherzustellen. Es kann ein- oder mehrteilig ausgeführt sein. Die Höhe des Distanzstücks kann an den zu überbrückenden Abstand zwischen der Toleranzausgleichsscheibe und dem elektrischen Anschlussstück angepasst sein. In jedem Fall wird über das Distanzstück ein großflächiger elektrischer Kontakt zwischen der Toleranzausgleichsscheibe und dem Anschlussstück hergestellt.

In einer Ausgestaltung ist in dem Windenergieanlagenrotorblatt oberhalb des elektrischen Anschlussstücks eine Bohrung angeordnet, in die das Distanzstück drehbeweglich eingesetzt ist, wobei das Distanzstück ein Langloch aufweist, durch das das Befestigungsmittel hindurchgeführt ist. Ähnlich wie die Nut in der Toleranzausgleichsscheibe kann das Langloch von einer ersten Radiusposition des Distanzstücks bis zu einer zweiten Radiusposition des Distanzstücks führen, z. B. ausgehend von einem Mittelpunkt des Distanzstücks bis nahe an seinen äußeren Umfang heran. Durch Drehen des Distanzstücks können Toleranzen bei der Bohrung ausgeglichen werden. Insbesondere kann das Langloch stets oberhalb einer Gewindebohrung im Anschlussstück angeordnet werden. Toleranzen beim Ausführen der Bohrung können beispielsweise dadurch entstehen, dass die genaue Lage des Anschlussstücks von außen nicht erkennbar ist, weil das Anschlussstück beispielsweise von einigen Lagen eines Fasermaterials verdeckt ist.

Die oben angegebene Aufgabe wird ebenfalls gelöst durch das Verfahren mit den Merkmalen des Anspruchs 10. Vorteilhafte Ausgestaltungen sind in den sich anschließenden Unteransprüchen angegeben.

Das Verfahren dient zur Herstellung eines Potentialausgleichs zwischen zwei elektrischen Anschlussstücken eines Windenergieanlagenrotorblatts und weist die folgenden Schritte auf.
- Bereitstellen eines Windenergieanlagenrotorblatts, das zwei integrierte, elektrische Anschlussstücke aufweist, die jeweils elektrisch mit einem Blitzschutzleiter des Windenergieanlagenrotorblatts verbunden sind,
- Anordnen einer Potentialausgleichsschiene an einer Außenseite des Windenergieanlagenrotorblatts in einer vorgegebenen Anordnung,
- Einsetzen einer Toleranzausgleichsscheibe in eine Durchgangsbohrung an einem Ende der Potentialausgleichsschiene,
- Ausrichten einer in der Toleranzausgleichsscheibe ausgebildeten Nut, die von einer ersten Radiusposition der Toleranzausgleichsscheibe zu einer zweiten Radiusposition der Toleranzausgleichsscheibe führt, relativ zu einem der Anschlussstücke durch Drehen der Toleranzausgleichsscheibe in der Durchgangsbohrung,
- Einsetzen eines Befestigungsmittels in die Nut und Befestigen des Befestigungsmittels an dem Anschlussstück.

Zu den Merkmalen und Vorteilen des Verfahrens wird auf die vorstehenden Erläuterungen der Potentialausgleichsanordnung verwiesen, die in jeder ihrer Ausgestaltungen für das Verfahren verwendet werden kann. Die Erläuterungen der korrespondierenden Merkmale gelten daher entsprechend.

In einer Ausgestaltung weist das Verfahren den folgenden weiteren Schritt auf:
- Ausführen einer Bohrung in das Windenergieanlagenrotorblatt oberhalb des Anschlussstücks, um eine Kontaktfläche des Anschlussstücks freizulegen.

Diese Ausgestaltung kann eingesetzt werden, wenn das Anschlussstück im Inneren des Windenergieanlagenrotorblatts und in einem Abstand von der äußeren Oberfläche des Windenergieanlagenrotorblatts angeordnet ist, beispielsweise abgedeckt durch eine oder mehrere Lagen eines Faserverbundmaterials. Durch die Bohrung wird ein Zugang zu dem Anschlussstück geschaffen, insbesondere zu einer Kontaktfläche des Anschlussstücks und/oder zu einer Aufnahme des Anschlussstücks für das Befestigungsmittel.

In einer Ausgestaltung weist das Verfahren den folgenden weiteren Schritt auf:
- Einsetzen eines elektrisch leitfähigen Distanzstücks in die Bohrung, sodass eine Unterseite des Distanzstücks an der Kontaktfläche des Anschlussstücks und nach dem Befestigen der Toleranzausgleichsscheibe eine Oberseite des Distanzstücks an einer Unterseite der Toleranzausgleichsscheibe anliegt.

In diesem Fall entsteht eine großflächige elektrische Verbindung über die genannten, aneinander anliegenden Flächen. Zu den möglichen Ausgestaltungen des Distanzstücks wird auf die vorstehenden Erläuterungen verwiesen.

In einer Ausgestaltung weist das Distanzstück ein Langloch auf, das durch Drehen des Distanzstücks in der Bohrung relativ zu dem Anschlussstück ausgerichtet wird. Auch hierzu wird auf die vorstehenden Erläuterungen verwiesen.

Nachfolgend wird die Erfindung anhand eines in Figuren dargestellten Ausführungsbeispiels näher erläutert. Es zeigen:
- Figur 1: eine Querschnittsdarstellung durch ein Windenergieanlagenrotorblatt mit einer erfindungsgemäßen Potentialausgleichsanordnung,
- Figur 2: die Potentialausgleichsschiene aus Figur 1 in einer perspektivischen Darstellung,
- Figur 3: ein Ende der Potentialausgleichsschiene aus Figur 2 in einer Explosionsdarstellung mit einer Toleranzausgleichsscheibe, einem Distanzstück und einem Gewindebolzen,
- Figur 4: die Toleranzausgleichsscheibe aus Figur 3 in einer Draufsicht auf die Unterseite und in einer Querschnittsdarstellung,
- Figur 5: eine alternative Gestaltung einer Toleranzausgleichsscheibe in einer Draufsicht auf die Unterseite und in einer Querschnittsdarstellung,
- Figur 6: das Distanzstück aus Figur 3 in einer Draufsicht und einer Querschnittsdarstellung,
- Figur 7: eine Querschnittsdarstellung durch ein Ende der Potentialausgleichsschiene aus Figur 1, an einem Windenergieanlagenrotorblatt befestigt.

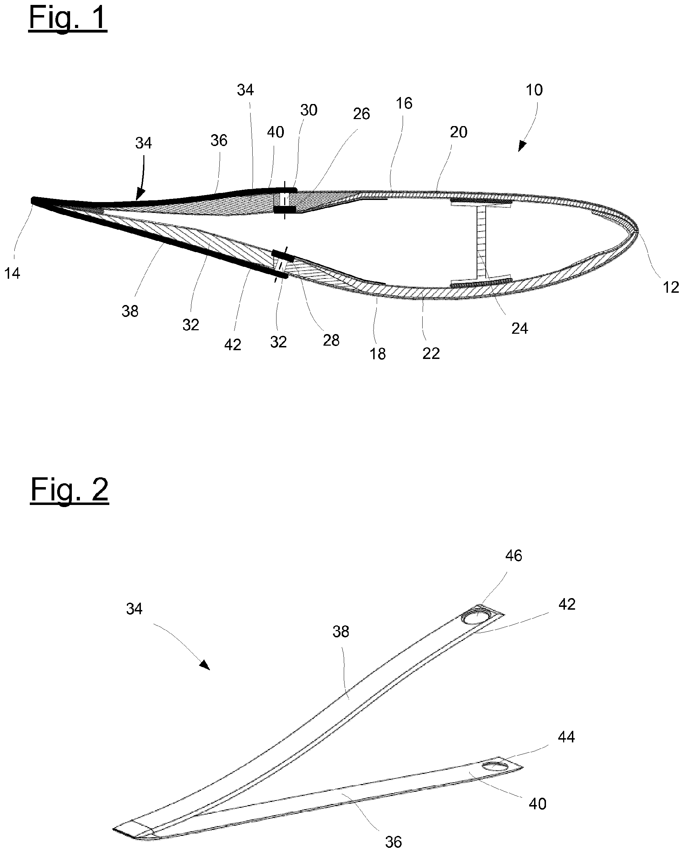

Die Querschnittsdarstellung der Figur 1 zeigt ein Windenergieanlagenrotorblatt 10, das eine Profilnasenkante 12, eine Profilendkante 14, eine Druckseite 16 und eine Saugseite 18 aufweist. Das Windenergieanlagenrotorblatt 10 ist aus einer saugseitigen und einer druckseitigen Halbschale zusammengefügt. Jede der beiden Halbschalen weist einen Hauptgurt 20 bzw. 22 auf. Die beiden Hauptgurte 20, 22 sind über einen Steg 24 miteinander verbunden. In jeder der beiden Halbschalen ist ein Blitzschutzleiter 26 bzw. 28 angeordnet, der sich in Längsrichtung des Rotorblatts von einer nicht dargestellten Blattwurzel bis in den Bereich einer ebenfalls nicht dargestellten Blattspitze erstreckt.

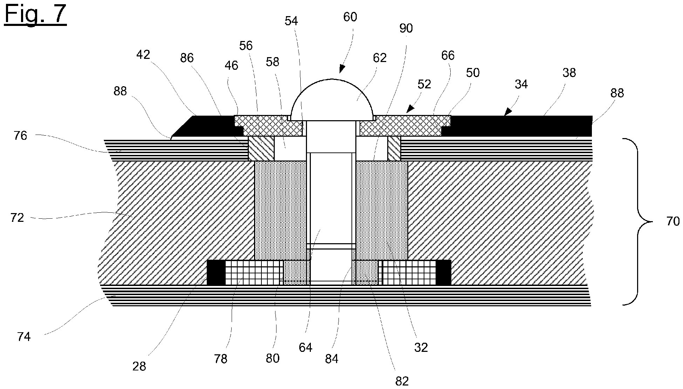

An der gezeigten Querschnittsposition ist jedem der beiden Blitzschutzleiter 26, 28 ein Anschlussstück 30 bzw. 32 zugeordnet, das elektrisch mit dem jeweiligen Blitzschutzleiter 26, 28 verbunden ist. Einzelheiten der Anschlussstücke 30, 32 werden später im Zusammenhang mit der Figur 7 näher erläutert.

Die Potentialausgleichsschiene 34 weist einen druckseitigen Schienenabschnitt 36 und einen saugseitigen Schienenabschnitt 38 auf, die gemeinsam eine V-Form bilden, wobei die Spitze der V-Form genau an der Profilendkante 14 angeordnet ist. Die Schenkel der V-Form werden von den beiden Schienenabschnitten 36, 38 gebildet, die entsprechend dem aerodynamischen Profil des Windenergieanlagenrotorblatts 10 leicht gekrümmt sind, sodass sie an dessen Oberfläche anliegen.

Die beiden Enden 40, 42 der Potentialausgleichsschiene 34 sind an der Außenseite des Windenergieanlagenrotorblatts im Bereich der beiden Anschlussstücke 30, 32 angeordnet und dort mit diesem elektrisch verbunden. Somit bewirkt die Potentialausgleichsschiene 34 einen Potentialausgleich zwischen den beiden Blitzschutzleitern 26, 28 um die Profilendkante 14 herum.

In der Figur 2 erkennt man die Form der Potentialausgleichsschiene 34 in Alleindarstellung. Die Potentialausgleichsschiene 34 besteht aus massivem Kupfer und ist im Querschnitt trapezförmig mit zur Außenseite des Windenergieanlagenrotorblatts 10 hin abfallenden Seitenflächen. Sie weist eine Höhe von etwa 5 mm und eine Breite von etwa 60 mm auf. Der druckseitige Schienenabschnitt 36 und der saugseitige Schienenabschnitt 38 sind jeweils aus einem einzelnen Kupferstrang gefertigt und an ihren in der Figur 2 links dargestellten Enden, an der Spitze der V-Form, miteinander verschweißt. An den freien Enden 40, 42 der beiden Schienenabschnitte 36, 38 ist jeweils eine Durchgangsbohrung 44 bzw. 46 ausgebildet.

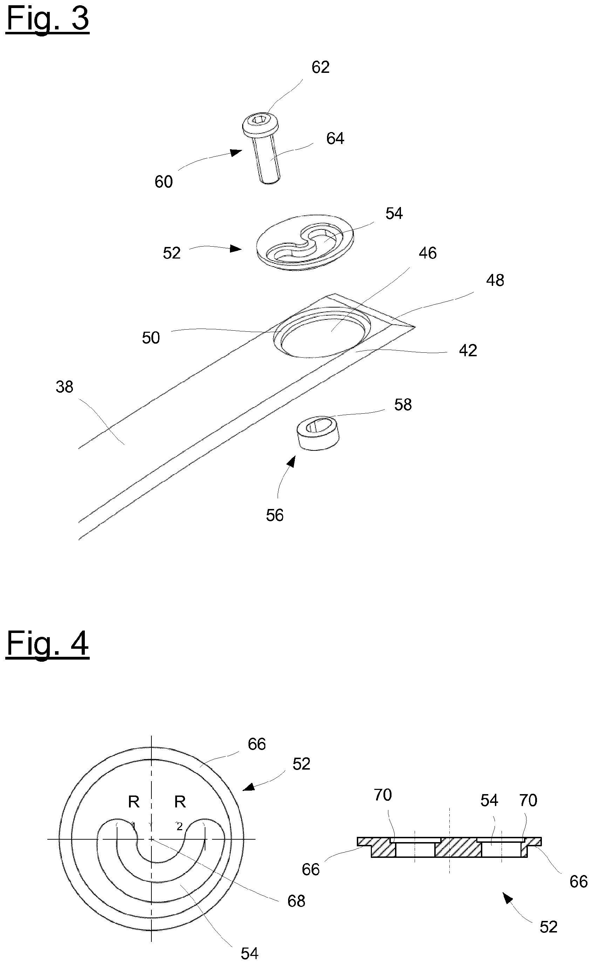

Figur 3 zeigt das Ende 42 des Schienenabschnitts 38 in einer vergrößerten Darstellung. Man erkennt dort gut den trapezförmigen Querschnitt des saugseitigen Schienenabschnitts 38 und auch, dass die Vorderseite 48 des saugseitigen Schienenabschnitts 38 ebenfalls abgeschrägt ist.

Die Durchgangsbohrung 46 weist eine Stufe 50 auf, die eine Breite von etwa 3 mm aufweist und auf etwa halber Höhe der Durchgangsbohrung 46 angeordnet ist. Sie teilt die Durchgangsbohrung 46 in etwa gleichlange Abschnitte mit größerem und kleinerem Durchmesser.

Oberhalb des saugseitigen Schienenabschnitts 38 ist eine Toleranzausgleichsscheibe 52 dargestellt, die in die Durchgangsbohrung 46 eingesetzt wird. Sie weist eine Nut 54 auf, die spiralförmig ausgebildet ist.

Unterhalb des saugseitigen Schienenabschnitts 38 ist ein Distanzstück 56 gezeigt, das aus massivem Kupfer besteht und eine Kreisscheibenform sowie ein Langloch 58 aufweist. Der Außendurchmesser des Distanzstücks 56 ist deutlich kleiner als der Durchmesser der Durchgangsbohrung 46, im dargestellten Beispiel ist er etwa halb so groß.

Als Befestigungsmittel dient ein Gewindebolzen 60, der einen Kopf 62 und einen Schaft 64 aufweist.

Bei der Montage der Potentialausgleichsschiene 34 an dem Windenergieanlagenrotorblatt 10 wird oberhalb eines in die saugseitige Halbschale integrierten Anschlussstücks 32 zunächst eine Bohrung eingebracht, in die das Distanzstück 56 eingesetzt wird. Falls die Bohrung nicht exakt oberhalb der Mitte des Anschlussstücks 32 ausgeführt wurde, kann das Distanzstück 56 so lange gedreht werden, bis eine im Anschlussstück 32 ausgebildete Gewindebohrung 84 (siehe Fig. 7) vollständig durch das Langloch 58 hindurch sichtbar ist. Anschließend wird die Potentialausgleichsschiene 34 am Windenergieanlagenrotorblatt angeordnet und in der vorgesehenen Position ausgerichtet, insbesondere so, dass eine Längsrichtung der Potentialausgleichsschiene 34 exakt in Strömungsrichtung liegt.

Anschließend wird die Toleranzausgleichsscheibe 52 in die Durchgangsbohrung 46 eingesetzt und gegebenenfalls so lange gedreht, bis das Langloch 58 im Distanzstück 56 und die darunter befindliche Gewindebohrung 84 des Anschlussstücks 32 durch die Nut 54 hindurch sichtbar sind. Danach kann der Gewindebolzen 60 in die Nut 54 eingesetzt, durch das Langloch 58 hindurch geführt und in die Gewindebohrung 84 des Anschlussstücks 32 eingeschraubt werden. Nach dem Anziehen des Gewindebolzens 60 liegt dessen Kopf 62 an der Toleranzausgleichsscheibe 52 an und zieht diese an die Stufe 50 und gemeinsam mit dem saugseitigen Schienenabschnitt 38 an das Distanzstück 56 und das Anschlussstück 32 heran.

Figur 4 zeigt weitere Einzelheiten der Toleranzausgleichsscheibe 52. Links ist eine Draufsicht auf die Unterseite gezeigt, aus der ersichtlich ist, dass die Toleranzausgleichsscheibe 52 an ihrem Außenumfang ebenfalls eine Stufe 66 aufweist und somit komplementär zu der Durchgangsöffnung 46 mit ihrer Stufe 50 ausgebildet ist. Die Nut 54 ist spiralförmig ausgebildet und führt von einer ersten Radiusposition R₁ zu einer zweiten Radius Position R₂, wobei die erste Radiusposition R₁ nahe dem Mittelpunkt 68 der Toleranzausgleichsscheibe 52 angeordnet ist und die zweite Radiusposition R₂ nahe dem äußeren Umfang der Toleranzausgleichsscheibe 52.

Die ebenfalls in Figur 4 enthaltene Querschnittsdarstellung entlang der waagerecht gestrichelten Linie der Figur 4 zeigt besonders deutlich die Stufe 66 am äußeren Umfang der Toleranzausgleichsscheibe 52 und außerdem den Querschnitt der Nut 54, die auf beiden Seiten jeweils eine Stufe 70 aufweist.

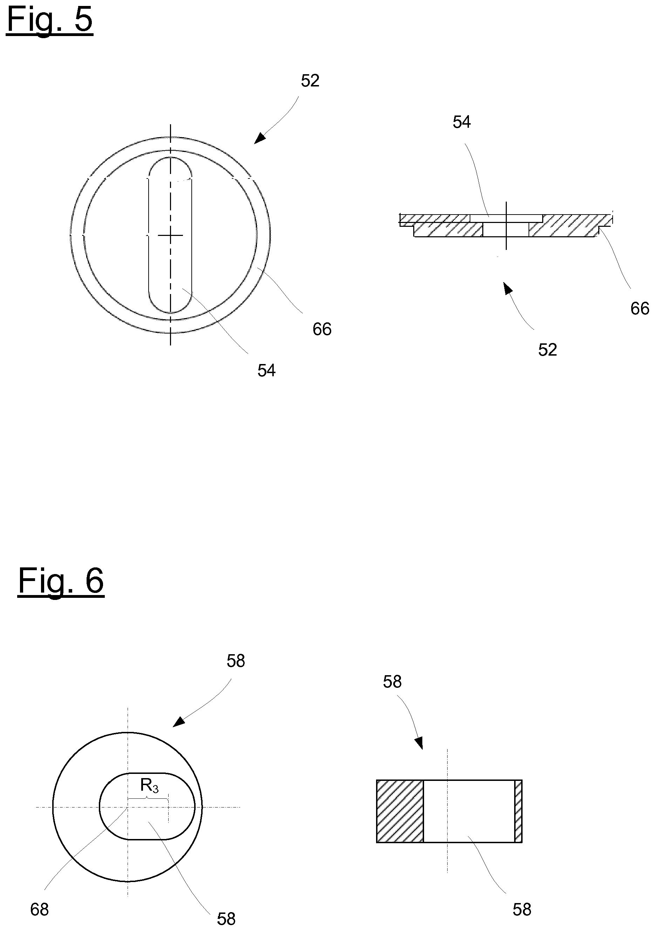

Figur 5 zeigt eine alternative Ausgestaltung der Toleranzausgleichsscheibe 52. Links ist eine Draufsicht auf die Unterseite gezeigt, aus der ersichtlich ist, dass die Toleranzausgleichsscheibe 52 an ihrem Außenumfang eine Stufe 66 aufweist und somit komplementär zu der Durchgangsöffnung 46 mit ihrer Stufe 50 ausgebildet ist. Die Nut 54 ist in Form eines Langlochs ausgebildet.

Figur 6 zeigt Einzelheiten des Distanzstücks 56 in einer Draufsicht und einer Querschnittsdarstellung. Das Distanzstück 56 weist ein Langloch 58 auf, welches eine Radiusposition R₃ überbrückt.

Figur 7 zeigt einen vergrößerten Ausschnitt durch das Ende 42 des saugseitigen Schienenabschnitts 38 und eine darunter angeordnete Wandung 70 der saugseitigen Halbschale des Windenergieanlagenrotorblatts 10. Die Wandung 70 weist in der Mitte einen Einleger 72 aus einem geschäumten Kunststoffmaterial oder aus Balsaholz auf, in den der Blitzschutzleiter 28 integriert ist. Der Blitzschutzleiter 28 verläuft in Längsrichtung des Rotorblatts, also im Wesentlichen senkrecht zu der Potentialausgleichsschiene 34. Ober- und unterhalb des Einlegers 72 gibt es jeweils mehrere Lagen 74, 76 eines glasfaserverstärkten Kunststoffmaterials. Der Blitzschutzleiter 28 weist einen metallischen Verbindungskörper 78 auf, in dem ein Innengewinde 80 ausgebildet ist. Das Anschlussstück 32 ist ein zylindrischer, massiver Metallkörper, der an seinem unteren Ende einen Gewindeabschnitt 82 aufweist, der in das Innengewinde 80 eingeschraubt ist. Außerdem hat das Anschlussstück 32 eine Gewindebohrung 84.

Das Anschlussstück 32 ist in einer Bohrung in dem Einleger 72 verklebt und auf diese Weise in das Windenergieanlagenrotorblatt 10 integriert. Beim Herstellen der betreffenden Windenergieanlagenrotorblatthalbschale durch Verbinden des Einlegers 72 mit den Lagen 74, 76 wird das Anschlussstück 32 zunächst vollständig verdeckt, wobei das Innengewinde 84 jedoch durch eine eingesetzte Schraube oder mit Hilfe eines Klebepads vor dem Eindringen von Klebstoff geschützt wird. Nach dem Aushärten der Rotorblatthalbschale ist das Anschlussstück 32 von außen durch die weiteren Langen 76 hindurch noch auffindbar und wird in einem ersten Schritt durch Ausführen einer Bohrung 86 durch die Lagen 76 hindurch freigelegt. Man erkennt in der Figur 7, dass diese Bohrung 86 nicht exakt konzentrisch zur Gewindebohrung 84 vorgenommen wurde, sondern relativ dazu um einige Millimeter versetzt.

Im nächsten Schritt wird in die Bohrung 86 das Distanzstück 56 mit dem Langloch 58 eingesetzt. Es wird so gedreht, dass das Langloch 58 exakt oberhalb der Gewindebohrung 84 angeordnet ist. Die Höhe des Distanzstücks 56 ist so gewählt, dass dessen Oberseite leicht über die Außenfläche der Wandung 70 und eine darauf aufgebrachte Klebstoffschicht 88 übersteht.

Die Potentialausgleichsschiene 34 wird dann in exakt der vorgesehenen Anordnung an das Windenergieanlagenrotorblatt 10 angesetzt. Die Toleranzausgleichsscheibe 52 wird in die Durchgangsbohrung 46 des saugseitigen Schienenabschnitts 38 eingesetzt, sodass die Stufe 66 der Toleranzausgleichsscheibe 52 an der Stufe 50 der Durchgangsbohrung 46 anliegt. Die Toleranzausgleichsscheibe 52 wird so gedreht, dass die Nut 54 exakt oberhalb der Gewindebohrung 54 angeordnet ist. Nun kann der Gewindebolzen 60 durch die Nut 54 und das Langloch 58 hindurch in die Gewindebohrung 84 eingeschraubt werden.

Schließlich wird der Gewindebolzen 60 so fest angezogen, dass die Unterseite der Toleranzausgleichsscheibe 52 an der Oberseite des Distanzstücks 56 und die Unterseite des Distanzsstücks 56 an der Kontaktfläche 90 des Anschlussstücks 32 anliegt. Hierdurch und durch den großflächigen Kontakt zwischen den beiden Stufen 50, 66 wird eine zuverlässige und hochstromtragfähige elektrische Verbindung zwischen dem Ende 42 der Potentialausgleichsschiene 34 und dem Anschlussstück 32 hergestellt.

Es versteht sich, dass die Verbindung zwischen dem anderen Ende 40 der Potentialausgleichsschiene 34 auf genau dieselbe Weise hergestellt werden kann.

### Liste der verwendeten Bezugszeichen

- 10: Windenergieanlagenrotorblatt
- 12: Profilnasenkante
- 14: Profilendkante
- 16: Druckseite
- 18: Saugseite
- 20, 22: Hauptgurt
- 24: Steg
- 26, 28: Blitzschutzleiter
- 30, 32: Anschlussstück
- 34: Potentialausgleichsschiene
- 36: Druckseitiger Schienenabschnitt
- 38: Saugseitiger Schienenabschnitt
- 40, 42: Enden der Potentialausgleichsschiene
- 44, 46: Durchgangsbohrung
- 48: Vorderseite
- 50: Stufe
- 52: Toleranzausgleichsscheibe
- 54: Nut
- 56: Distanzstück
- 58: Langloch
- 60: Gewindebolzen
- 62: Kopf
- 64: Schaft
- 66: Stufe
- 68: Mittelpunkt
- 70: Wandung
- 72: Einleger
- 74, 76: Lagen
- 78: Verbindungskörper
- 80: Innengewinde
- 82: Gewindeabschnitt
- 84: Gewindebohrung
- 86: Bohrung
- 88: Klebstoffschicht
- 90: Kontaktfläche

## Patentansprüche

1. Windenergieanlagenrotorblatt (10) mit zwei integrierten, elektrischen Anschlussstücken (30, 32), die jeweils elektrisch mit einem Blitzschutzleiter (26, 28) des Windenergieanlagenrotorblatts (10) verbunden sind, und einer Potentialausgleichsanordnung, **dadurch gekennzeichnet, dass**
• die Potentialausgleichsanordnung zur Verbindung der beiden Anschlussstücke (30, 32) vorgesehen und an einer Außenseite des Windenergieanlagenrotorblatts (10) befestigt ist und **gekennzeichnet ist durch**
• eine Potentialausgleichsschiene (34) mit zwei Enden (40, 42), wobei eines der beiden Enden (40) der Potentialausgleichsschiene (34) elektrisch mit einem der beiden Anschlussstücke (30) und das andere der beiden Enden (42) elektrisch mit dem anderen der beiden Anschlusstücke (32) verbunden ist und die Potentialausgleichsschiene (34) an mindestens einem der beiden Enden (40, 42) eine Durchgangsbohrung (46) aufweist,
• eine Toleranzausgleichsscheibe (52), die in die Durchgangsbohrung (46) drehbeweglich eingesetzt ist und die eine Nut (54) aufweist, die von einer ersten Radiusposition (R₁) der Toleranzausgleichsscheibe (52) zu einer zweiten Radiusposition (R₂) der Toleranzausgleichsscheibe (52) führt, und
• ein Befestigungsmittel, das in die Nut (54) der Toleranzausgleichsscheibe (52) eingesetzt und an dem elektrischen Anschlussstück (30, 32) befestigt ist.

2. Windenergieanlagenrotorblatt (10) nach Anspruch 1, **dadurch gekennzeichnet, dass** die Potentialausgleichsschiene (34) eine V-Form aufweist mit einem saugseitigen Schienenabschnitt (38) zur Anordnung an einer Saugseite (18) und einem druckseitigen Schienenabschnitt (36) zur Anordnung an einer Druckseite (16) des Windenergieanlagenrotorblatts (10), wobei die beiden Schienenabschnitte (36, 38) an der Spitze der V-Form miteinander verbunden sind oder ineinander übergehen.

3. Windenergieanlagenrotorblatt (10) nach Anspruch 1 oder 2, **dadurch gekennzeichnet, dass** die Durchgangsbohrung (46) eine Stufe (50) aufweist, an der die in die Durchgangsbohrung (46) eingesetzte Toleranzausgleichsscheibe (52) anliegt.

4. Windenergieanlagenrotorblatt (10) nach Anspruch 3, **dadurch gekennzeichnet, dass** die Toleranzausgleichsscheibe (52) an ihrem Außenumfang eine Stufe (66) aufweist, die an der Stufe (50) der Durchgangsbohrung(44, 46) anliegt.

5. Windenergieanlagenrotorblatt (10) nach einem der Ansprüche 1 bis 4, **dadurch gekennzeichnet, dass** die Nut (54) in der Toleranzausgleichsscheibe (52) in radialer Richtung verläuft.

6. Windenergieanlagenrotorblatt (10) nach einem der Ansprüche 1 bis 4, **dadurch gekennzeichnet, dass** die Nut (54) in der Toleranzausgleichsscheibe (52) spiralförmig verläuft.

7. Windenergieanlagenrotorblatt (10) nach einem der Ansprüche 1 bis 6, **dadurch gekennzeichnet, dass** eines der beiden Anschlussstücke (30, 32) eine Gewindebohrung (84) aufweist und das Befestigungsmittel ein Gewindebolzen (60) mit einem Kopf (62) und einem Schaft (64) ist, wobei der Schaft (64) in die Gewindebohrung (84) eingeschraubt ist und der Kopf (62) an der Toleranzausgleichsscheibe (52) anliegt.

8. Windenergieanlagenrotorblatt (10) nach einem der Ansprüche 1 bis 7, **dadurch gekennzeichnet, dass** zwischen der Toleranzausgleichsscheibe (52) und dem elektrischen Anschlussstück (30, 32) ein elektrisch leitfähiges Distanzstück (56) angeordnet ist, das mit einer Unterseite an einer Kontaktfläche (90) des Anschlussstücks (30, 32) und mit einer Oberseite an der Toleranzausgleichsscheibe (52) anliegt.

9. Windenergieanlagenrotorblatt (10) nach Anspruch 8, **dadurch gekennzeichnet, dass** in dem Windenergieanlagenrotorblatt (10) oberhalb des elektrischen Anschlussstücks eine Bohrung (86) angeordnet ist, in die das Distanzstück (56) drehbeweglich eingesetzt ist, wobei das Distanzstück (56) ein Langloch (58) aufweist, durch das das Befestigungsmittel hindurchgeführt ist.

10. Verfahren zur Herstellung eines Potentialausgleichs zwischen zwei elektrischen Anschlussstücken (30, 32) eines Windenergieanlagenrotorblatts (10) mit den folgenden Schritten:
• Bereitstellen eines Windenergieanlagenrotorblatts (10), das zwei integrierte, elektrische Anschlussstücke (30, 32) aufweist, die jeweils elektrisch mit einem Blitzschutzleiter (26, 28) des Windenergieanlagenrotorblatts (10) verbunden sind,
• Anordnen einer Potentialausgleichsschiene (34) an einer Außenseite des Windenergieanlagenrotorblatts (10) in einer vorgegebenen Anordnung,
• Einsetzen einer Toleranzausgleichsscheibe (52) in eine Durchgangsbohrung (46) an einem Ende der Potentialausgleichsschiene (34),
• Ausrichten einer in der Toleranzausgleichsscheibe (52) ausgebildeten Nut (54), die von einer ersten Radiusposition (R₁) der Toleranzausgleichsscheibe (52) zu einer zweiten Radiusposition (R₂) der Toleranzausgleichsscheibe (52) führt, relativ zu einem der Anschlussstücke (30, 32) durch Drehen der Toleranzausgleichsscheibe (52) in der Durchgangsbohrung (46),
• Einsetzen eines Befestigungsmittels in die Nut (54) und Befestigen des Befestigungsmittels an dem Anschlussstück (30, 32).

11. Verfahren nach Anspruch 10, **gekennzeichnet durch** den weiteren Schritt:
• Ausführen einer Bohrung (86) in das Windenergieanlagenrotorblatt (10) oberhalb des Anschlussstücks (30, 32), um eine Kontaktfläche (90) des Anschlussstücks (32) freizulegen.

12. Verfahren nach Anspruch 11, **gekennzeichnet durch** den weiteren Schritt:
• Einsetzen eines elektrisch leitfähigen Distanzstücks (56) in die Bohrung (68), so dass eine Unterseite des Distanzstücks (56) an der Kontaktfläche (90) des Anschlussstücks (30, 32) und nach dem Befestigen der Toleranzausgleichsscheibe (52) eine Oberseite des Distanzstücks (56) an einer Unterseite der Toleranzausgleichsscheibe (52) anliegt.

13. Verfahren nach Anspruch 12, **dadurch gekennzeichnet, dass** das Distanzstück (56) ein Langloch (58) aufweist, das durch Drehen des Distanzstücks (56) in der Bohrung (86) relativ zu dem Anschlussstück (30, 32) ausgerichtet wird.

## Claims

1. A wind turbine rotor blade (10) having two integrated electrical connecting pieces (30, 32) that are each connected electrically to a lightning conductor (26, 28) of the wind turbine rotor blade (10) and an equipotential bonding arrangement, **characterized in that**:
• the equipotential bonding arrangement is provided for connecting the two connecting pieces (30, 32), and is fastened to an outer side of the wind turbine rotor blade (10), and is **characterized by**
• an equipotential bonding rail (34) with two ends (40, 42), wherein one of the two ends (40) of the equipotential bonding rail (34) is electrically connected to one of the two connecting pieces (30), and the other of the two ends (42) is electrically connected to the other of the two connecting pieces (32), and the equipotential bonding rail (34) has a through-hole (46) in at least one of the two ends (40, 42),
• a tolerance compensation disc (52) that is rotatably inserted into the through-hole (46) and that has a groove (54) which leads from a first radial position (R₁) of the tolerance compensation disc (52) to a second radial position (R₂) of the tolerance compensation disc (52), and
• a fastener that is inserted into the groove (54) of the tolerance compensation disc (52) and is fastened to the electrical connecting piece (30, 32).

2. The wind turbine rotor blade (10) according to claim 1, **characterized in that** the equipotential bonding rail (34) has a V-shape with a suction-side rail section (38) for being arranged on a suction side (18), and a pressure side rail section (36) for being arranged on a pressure side (16) of the wind turbine rotor blade (10), wherein the two rail sections (36, 38) are connected to each other at the tip of the V-shape, or transition into each other.

3. The wind turbine rotor blade (10) according to claim 1 or 2, **characterized in that** the through-hole (46) has a step (50) against which the tolerance compensation disc (52) inserted into the through-hole (46) lies.

4. The wind turbine rotor blade (10) according to claim 3, **characterized in that** the tolerance compensation disc (52) has a step (66) in its outer circumference that lies against the step (50) of the through-hole (44, 46).

5. The wind turbine rotor blade (10) according to one of claims 1 to 4, **characterized in that** the groove (54) runs in a radial direction in the tolerance compensation disc (52).

6. The wind turbine rotor blade (10) according to one of claims 1 to 4, **characterized in that** the groove (54) runs in a spiral in the tolerance compensation disc (52).

7. The wind turbine rotor blade (10) according to one of claims 1 to 6, **characterized in that** one of the two connecting pieces (30, 32) has a threaded hole (84), and that the fastener is a threaded bolt (60) with a head (62) and a shaft (64), wherein the shaft (64) is screwed into the threaded hole (84), and the head (62) lies against the tolerance compensation disc (52).

8. The wind turbine rotor blade (10) according to one of claims 1 to 7, **characterized in that** an electrically conductive spacer (56) is arranged between the tolerance compensation disc (52) and the electrical connecting piece (30, 32), which lies with a bottom side against a contact surface (90) of the connecting piece (30, 32), and with a top side against the tolerance compensation disc (52).

9. The wind turbine rotor blade (10) according to claim 8, **characterized in that** a hole (86) is arranged in the wind turbine rotor blade (10) above the electrical connecting piece in which the spacer (56) is rotatably inserted, wherein the spacer (56) has a slot (58) through which the fastener is guided.

10. A method for establishing equipotential bonding between two electrical connecting pieces (30, 32) of a wind turbine rotor blade (10) having the following steps:
• providing a wind turbine rotor blade (10) that has two integrated, electrical connecting pieces (30, 32) which are each electrically connected to a lightning conductor (26, 28) of the wind turbine rotor blade (10),
• arranging an equipotential bonding rail (34) on an outer side of the wind turbine rotor blade (10) in a given arrangement,
• inserting a tolerance compensation disc (52) into a through-hole (46) in an end of the equipotential bonding rail (34),
• aligning a groove (54) formed in the tolerance compensation disc (52) that runs from a first radial position (R₁) of the tolerance compensation disc (52) to a second radial position (R₂) of the tolerance compensation disc (52) relative to one of the connecting pieces (30, 32) by rotating the tolerance compensation disc (52) in the through-hole (46),
• inserting a fastener into the groove (54), and fasten the fastener to the connecting piece (30, 32).

11. The method according to claim 10, **characterized by** the additional step:
• creating a hole (86) in the wind turbine rotor blade (10) above the connecting piece (30, 32) in order to expose a contact surface (90) of the connecting piece (32).

12. The method according to claim 11, **characterized by** the additional step:
• inserting an electrically conductive spacer (56) into the hole (68) so that a bottom side of the spacer (56) lies against the contact surface (90) of the connecting piece (30, 32) and, after the tolerance compensation disc (52) is fastened, a top side of the spacer disc (56) lies against a bottom side of the tolerance compensation disc (52).

13. The method according to claim 12, **characterized in that** the spacer (56) has a slot (58) that is aligned by turning the spacer (56) in the hole (86) relative to the connecting piece (30, 32).

## Revendications

1. Pale de rotor d'éolienne (10) avec deux pièces de raccordement électriques intégrées (30, 32), lesquelles sont respectivement reliées à un conducteur de parafoudre (26, 28) de la pale de rotor d'éolienne (10), et un dispositif d'équipotentialité, **caractérisée en ce que** :
• le dispositif d'équipotentialité est destiné à être relié aux deux pièces de raccordement (30, 32) et fixé à un côté extérieur de la pale de rotor d'éolienne (10), et **caractérisé par**
• un rail d'équipotentialité (34) avec deux extrémités (40, 42), l'une des deux extrémités (40) du rail d'équipotentialité (34) étant reliée électriquement à l'une des deux pièces de raccordement (30) et l'autre des deux extrémités (42) étant reliée électriquement à l'autre des deux pièces de raccordement (32), et le rail d'équipotentialité (34) présentant un perçage traversant (46) à l'une au moins des deux extrémités (40, 42),
• un disque de compensation de tolérance (52) inséré de façon mobile en rotation dans le perçage traversant (46) et présentant une rainure (54) menant d'une première position radiale (R1) du disque de compensation de tolérance (52) à une deuxième position radiale (R2) du disque de compensation de tolérance (52), et
• un moyen de fixation inséré dans la rainure (54) du disque de compensation de tolérance (52) et fixé à la pièce de raccordement électrique (30, 32).

2. Pale de rotor d'éolienne (10) selon la revendication 1, **caractérisée en ce que** le rail d'équipotentialité (34) présente une forme en V avec une section de rail côté aspiration (38) destinée à être agencée sur un côté aspiration (18) et une section de rail côté pression (36) destinée à être agencée sur un côté pression (16) de la pale de rotor d'éolienne (10), les deux sections de rail (36, 38) étant reliées l'une à l'autre à la pointe de la forme en V ou se prolongeant l'une l'autre.

3. Pale de rotor d'éolienne (10) selon la revendication 1 ou 2, **caractérisée en ce que** le perçage traversant (46) présente un gradin (50) sur lequel s'applique le disque de compensation de tolérance (52) inséré dans le perçage traversant (46).

4. Pale de rotor d'éolienne (10) selon la revendication 3, **caractérisée en ce que** sur son pourtour extérieur, le disque de compensation de tolérance (52) présente un gradin (66), lequel s'applique sur le gradin (50) du perçage traversant (44, 46).

5. Pale de rotor d'éolienne (10) selon l'une des revendications 1 à 4, **caractérisée en ce que** la rainure (54) s'étend dans la direction radiale dans le disque de compensation de tolérance (52).

6. Pale de rotor d'éolienne (10) selon l'une des revendications 1 à 4, **caractérisée en ce que** la rainure (54) dans le disque de compensation de tolérance (52) s'étend en forme de spirale.

7. Pale de rotor d'éolienne (10) selon l'une des revendications 1 à 6, **caractérisée en ce que** l'une des deux pièces de raccordement (30, 32) présente un perçage fileté (84) et le moyen de fixation est un boulon fileté (60) avec une tête (62) et une tige (64), la tige (64) étant vissée dans le perçage fileté (84) et la tête (62) s'appliquant sur le disque de compensation de tolérance (52).

8. Pale de rotor d'éolienne (10) selon l'une des revendications 1 à 7, **caractérisée en ce qu'**entre le disque de compensation de tolérance (52) et la pièce de raccordement électrique (30, 32) est disposée une pièce intercalaire électriquement conductrice (56), laquelle s'applique avec un côté inférieur sur une surface de contact (90) de la pièce de raccordement (30, 32) et avec un côté supérieur sur le disque de compensation de tolérance (52).

9. Pale de rotor d'éolienne (10) selon la revendication 8, **caractérisée en ce que** dans la pale de rotor d'éolienne (10), au-dessus de la pièce de raccordement électrique, se trouve un perçage (86) dans lequel est insérée de façon mobile en rotation la pièce intercalaire (56), la pièce intercalaire (56) présentant un trou oblong (58) à travers lequel est inséré le moyen de fixation.

10. Procédé pour la réalisation d'une compensation de potentiel entre deux pièces de raccordement électriques (30, 32) d'une pale de rotor d'éolienne (10), comprenant les étapes suivantes :
• mise à disposition d'une pale de rotor d'éolienne (10) présentant deux pièces de raccordement électriques intégrées (30, 32), lesquelles sont respectivement reliées à un conducteur de parafoudre (26, 28) de la pale de rotor d'éolienne (10),
• mise en place d'un rail d'équipotentialité (34) sur un côté extérieur de la pale de rotor d'éolienne (10) dans un agencement prédéfini,
• insertion d'un disque de compensation de tolérance (52) dans un perçage traversant (46) à une extrémité du rail d'équipotentialité (34),
• orientation d'une rainure (54) formée dans le disque de compensation de tolérance (52), laquelle mène d'une première position radiale (R1) du disque de compensation de tolérance (52) à une deuxième position radiale (R2) du disque de compensation de tolérance (52), par rapport à l'une des pièces de raccordement (30, 32), par rotation du disque de compensation de tolérance (52) dans le perçage traversant (46),
• insertion d'un moyen de fixation dans la rainure (54) et fixation du moyen de fixation sur la pièce de raccordement (30, 32).

11. Procédé selon la revendication 10, **caractérisé par** l'étape supplémentaire suivante :
• réalisation d'un perçage (86) dans la pale de rotor d'éolienne (10), au-dessus de la pièce de raccordement (30, 32), pour dégager une surface de contact (90) de la pièce de raccordement (32).

12. Procédé selon la revendication 11, **caractérisé par** l'étape supplémentaire suivante :
• insertion d'une pièce intercalaire électriquement conductrice (56) dans le perçage (68), de manière à ce qu'un côté inférieur de la pièce intercalaire (56) s'applique sur la surface de contact (90) de la pièce de raccordement (30, 32) et à ce qu'après la fixation du disque de compensation de tolérance (52), un côté supérieur de la pièce intercalaire (56) s'applique sur un côté inférieur du disque de compensation de tolérance (52).

13. Procédé selon la revendication 12, **caractérisé en ce que** la pièce intercalaire (56) présente un trou oblong (58), lequel est orienté par rapport à la pièce de raccordement (30, 32) par une rotation de la pièce intercalaire (56) dans le perçage (86).
